# EUROPEAN PATENT SPECIFICATION

(11) **EP 3 851 491 B1**
(45) Date of publication and mention of the grant of the patent: **04.06.2025**
(21) Application number: 19858815.4
(22) Date of filing: 16.07.2019
(51) Int. Cl.: C08L 39/06, B32B 27/20, B32B 27/30, C08K 3/013, C08K 3/04, C08L 27/12, H01B 1/00, H01B 1/04, H01B 1/24, H01B 5/14, C08F 226/10, C08K 3/22, C08L 27/16, C09D 127/16, C09D 139/06, H01M 4/62, H01M 10/0525, H01M 4/02

(54) **COMPOSITION AND MULTILAYER BODY**
ZUSAMMENSETZUNG UND MEHRSCHICHTIGER KÖRPER
COMPOSITION ET CORPS MULTICOUCHE

(30) Priority: 14.09.2018 JP 2018172490
(43) Date of publication of application: 21.07.2021
(73) Proprietor: DAIKIN INDUSTRIES, LTD., Osaka-Shi, Osaka 530-0001 (JP)
(72) Inventor: SUZUKI, Yuuki, Osaka-Shi, Osaka 530-8323 (JP); SHIMOOKA, Toshiharu, Osaka-Shi, Osaka 530-8323 (JP); KUWAJIMA, Yoshiko, Osaka-Shi, Osaka 530-8323 (JP); HIDAKA, Tomoya, Osaka-Shi, Osaka 530-8323 (JP); YAMAZAKI, Shigeaki, Osaka-Shi, Osaka 530-8323 (JP)
(74) Representative: Goddar, Heinz J.
(86) International application number: PCT/JP2019/027852
(87) International publication number: WO 2020/054210

(56) References cited:
- EP-A1- 1 577 900
- EP-A1- 3 252 086
- WO-A1-2016/017759
- JP-A- 2004 349 240
- JP-A- 2005 115 359
- JP-A- S61 284 761
- DATABASE WPI Week 201704, Derwent World Patents Index; AN 2016-80806V, XP002806332
- DATABASE WPI Week 201617, Derwent World Patents Index; AN 2016-08962N, XP002806333

## Description

### TECHNICAL FIELD

The disclosure relates to compositions and laminates.

### BACKGROUND ART

In the fields where inorganic filler is used, such as the fields of ink, rubber, conductive films, and electrochemical devices **(e.g.,** batteries), dispersants are generally used for uniformly dispersing inorganic filler in dispersion media.

For example, in the field of secondary batteries such as lithium-ion batteries, polyvinylpyrrolidone (PVP) has been widely used as a dispersant for dispersing carbon filler (e.g., acetylene black, oil furnace black, carbon nanotube, and graphene) that is used as a positive electrode conductive aid (e.g., see Patent Literature documents 1 to 3).

Proposed in fields other than the field of dispersants is to use a copolymer of tetrafluoroethylene and N-vinylpyrrolidone as, for example, a hydrophilizing agent, a material for preventing adhesion of aquatic organisms, or a biocompatible material (e.g., Patent Literature documents 4 to 6).

### CITATION LIST

### - Patent Literature

Patent Literature 1: JP 2005-162877 A
Patent Literature 2: JP 2017-54649 A
Patent Literature 3: JP 2016-25077 A
Patent Literature 4: WO 2016/133206
Patent Literature 5: WO 2016/204142
Patent Literature 6: WO 2016/204217
Especially, WO 2016/204142 discloses amaterial for preventing adhesion of aquatic organisms which is characterized by comprising a copolymer which contains a fluoroolefin unit and a polymerizable vinyl compound unit having an amide bond.
WO 2016/017759 A1 discloses an all-solid secondary battery equipped with a positive electrode active material layer, a negative electrode active material layer, and a solid electrolyte layer, wherein at least one from among the positive electrode active material layer, the negative electrode active material layer, and the solid electrolyte layer includes an inorganic solid electrolyte having the ionic conductivity of a metal element belonging to group 1 or group 2 of the periodic table, and a binder formed from a specified polymer compound.

### SUMMARY OF INVENTION

### - Technical Problem

The disclosure aims to provide a composition that enables excellent dispersibility of an inorganic filler and has excellent oxidation resistance.

### - Solution to Problem

The above problem is solved in accordance with the subject-matter of the independent claims. Further embodiments result from the subclaims.

The disclosure relates especially to a composition containing an inorganic filler, a copolymer of a fluoromonomer and an amide bond-containing polymerizable vinyl compound, and a solvent
wherein
the inorganic filler is at least one selected from the group consisting of a carbon filler, and a ceramic filler,
the copolymer is a copolymer of at least one fluoromonomer selected from the group consisting of tetrafluoroethylene and hexafluoropropylene and at least one amide bond-containing polymerizable vinyl compound selected from the group consisting of N-vinyl lactam compounds, acyclic N-vinylamide compounds, acyclic N-allyl amide compounds, and N-allyl lactam compounds, and
the copolymer contains a unit of the fluoromonomer and a unit of the amide bond-containing polymerizable vinyl compound in amounts of 65 to 7 mol% and 35 to 93 mol%, respectively, of all monomer units.

Preferably, the composition has a mass ratio (inorganic filler/copolymer) of the inorganic filler to the copolymer of 0.1 to 100.

The copolymer is a copolymer of at least one fluoromonomer selected from the group consisting of tetrafluoroethylene and hexafluoropropylene and the amide bond-containing polymerizable vinyl compound, and the copolymer contains a unit of the fluoromonomer and a unit of the amide bond-containing polymerizable vinyl compound in amounts of 65 to 7 mol% and 35 to 93 mol%, respectively, of all monomer units.

Preferably, the inorganic filler includes a carbon filler.

Preferably, the inorganic filler includes fibrous carbon.

Preferably, the inorganic filler includes carbon nanotube.

The disclosure also relates to a laminate including a substrate and a film that is on the substrate and is obtainable from the composition.

The disclosure also relates to a conductive member including the laminate.

The disclosure also relates to a dispersant for dispersing an inorganic filler in a solvent, the dispersant containing a copolymer of a fluoromonomer and an amide bond-containing polymerizable vinyl compound.

### - Advantageous Effects of Invention

The disclosure can provide a composition that enables excellent dispersibility of an inorganic filler and has excellent oxidation resistance.

### DESCRIPTION OF EMBODIMENTS

The following describes the disclosure in detail.

The disclosure relates to a composition containing an inorganic filler; a copolymer of a fluoromonomer and an amide bond-containing polymerizable vinyl compound; and a solvent
wherein
the inorganic filler is at least one selected from the group consisting of a carbon filler, and a ceramic filler,
the copolymer is a copolymer of at least one fluoromonomer selected from the group consisting of tetrafluoroethylene and hexafluoropropylene and at least one amide bond-containing polymerizable vinyl compound selected from the group consisting of N-vinyl lactam compounds, acyclic N-vinylamide compounds, acyclic N-allyl amide compounds, and N-allyl lactam compounds, and
the copolymer contains a unit of the fluoromonomer and a unit of the amide bond-containing polymerizable vinyl compound in amounts of 65 to 7 mol% and 35 to 93 mol%, respectively, of all monomer units.

Since the composition of the disclosure contains the copolymer, the composition has excellent dispersibility of the inorganic filler (dispersibility of the inorganic filler in a solvent) and excellent oxidation resistance compared to the case of using polyvinylpyrrolidone (PVP), for example.

Also, the composition of the disclosure has excellent dispersibility of the inorganic filler and excellent oxidation resistance even when the copolymer is in a relatively small amount.

Also, the composition of the disclosure has excellent dispersibility of the inorganic filler even after a long period of time (e.g., after 7 days or more after preparation).

The composition of the disclosure shows little change in viscosity.

The inorganic filler includes at least one selected from the group consisting of a carbon filler, and a ceramic filler.

Examples of the carbon filler include carbon black (e.g., Ketjen black, acetylene black, furnace black, and channel black), fibrous carbon (e.g., carbon fiber, carbon nanotube, carbon nanofiber, carbon nanohorn, and carbon nanobrush), sheet-shaped carbon (e.g., graphene), spherical carbon (e.g., fullerene), nanoporous carbon, and graphite (natural graphite, artificial graphite).

Preferred among these is fibrous carbon, and more preferred is carbon nanotube (CNT).

The carbon black preferably has an average particle size of 0.1 nm to 100 µm, more preferably 1 nm to 50 µm.

The average particle size may be determined with a particle size distribution analyzer or an electron microscope (SEM).

The fibrous carbon preferably has an average fiber diameter of 0.1 nm to 500 nm, more preferably 1 to 200 nm.

The fibrous carbon preferably has an average fiber length/average fiber diameter ratio of 1 to 5000, more preferably 1 to 500.

The average fiber diameter and the average fiber length may be determined with a particle size distribution analyzer or an electron microscope (SEM).

The sheet-shaped carbon may have a single-layer structure or a multi-layer structure including multiple sheets stacked. The multi-layer structure preferably includes 50 layers or less, more preferably 10 layers or less.

The number of stacked layers may be determined by Raman spectroscopy.

The sheet-shaped carbon preferably has an average layer thickness of 0.1 to 1 nm, more preferably 0.2 to 0.4 nm.

The longest portions of the sheet-shaped carbons when spread out preferably have an average length of 0.1 nm to 1,000 µm, more preferably 1 nm to 100 µm.

The average length may be determined with an electron microscope (SEM).

The spherical carbon preferably has an average particle size of 0.1 nm to 100 µm, more preferably 0.1 nm to 1 µm.

The average particle size may be determined with a particle size distribution analyzer or an electron microscope (SEM).

Examples of the ceramic filler include particles of inorganic nitride, carbide, boride, or oxide of zirconium, tantalum, titanium, tungsten, silicon, aluminum, or beryllium. Specific examples thereof include particles of alumina, zirconia, aluminum nitride, beryllia, zirconium nitride, zirconium boride, titanium nitride, titanium oxide, silicon oxide, tantalum carbide, tungsten carbide, zirconium carbide, titanium carbide, silicon carbide, aluminum boride, and titanium boride.

Preferred among these are alumina, titanium oxide, and silicon oxide.

The ceramic filler preferably has an average particle size of 0.01 nm to 100 µm, more preferably 0.1 nm to 10 µm.

The average particle size may be determined with a particle size distribution analyzer or an electron microscope (SEM).

The inorganic filler is preferably a conductive inorganic filler, more preferably a carbon filler.

The copolymer is a copolymer containing a fluoromonomer unit and an amide bond-containing polymerizable vinyl compound unit. Herein, the copolymer may also be referred to as a fluoromonomer/amide bond-containing polymerizable vinyl compound copolymer.

In the composition of the disclosure, the copolymer may serve as a dispersant to disperse the inorganic filler in the solvent.

In order to further improve the dispersibility and oxidation resistance, the fluoromonomer/amide bond-containing polymerizable vinyl compound copolymer preferably contains the fluoromonomer unit and the amide bond-containing polymerizable vinyl compound unit in amounts 65 to 7 mol% and 35 to 93 mol%, respectively. More preferably, the fluoromonomer unit and the amide bond-containing polymerizable vinyl compound unit are present in amounts of 55 to 15 mol% and 45 to 85 mol%, respectively. Particularly preferably, the fluoromonomer unit and the amide bond-containing polymerizable vinyl compound unit are present in amounts of 45 to 20 mol% and 55 to 80 mol%, respectively.

More than 99.9 mol% of the amide bond-containing polymerizable vinyl compound unit may cause poor oxidation resistance. Less than 0.1 mol% of the amide bond-containing polymerizable vinyl compound unit may cause reduced surface active performance and poor dispersibility.

The copolymer preferably has a mole ratio of the fluoromonomer unit to the amide bond-containing polymerizable vinyl compound unit (fluoromonomer unit/amide bond-containing polymerizable vinyl compound unit) of 0.07 to 1.50, more preferably 0.25 to 1.25, still more preferably 0.25 to 0.82. Too low a mole ratio may cause poor oxidation resistance. Too high a mole ratio may cause poor dispersibility.

The fluoromonomer includes at least one selected from the group consisting of tetrafluoroethylene and hexafluoropropylene

The polymerizable vinyl compound contains not only an amide bond but also a polymerizable vinyl group.

The amide bond is a bond between a carbonyl group and a nitrogen atom.

Examples of the polymerizable vinyl group include vinyl, allyl, vinyl ether, vinyl ester, and acrylic groups.

The amide bond-containing polymerizable vinyl compound includes at least one selected from the group consisting of N-vinyl lactam compounds such as N-vinyl-β-propiolactam, N-vinyl-2-pyrrolidone, N-vinyl-γ-valerolactam, N-vinyl-2-piperidone, and N-vinyl-heptolactam; acyclic N-vinylamide compounds such as N-vinyl formamide and N-methyl-N-vinyl acetamide; acyclic N-allyl amide compounds such as N-allyl-N-methyl formamide and allyl urea; N-allyl lactam compounds such as 1-(2-propenyl)-2-pyrrolidone; and acrylamide compounds such as (meth)acrylamide, N,N-dimethylacrylamide, and N-isopropylacrylamide.

Examples of the amide bond-containing polymerizable vinyl compound also include a compound represented by the following formula: 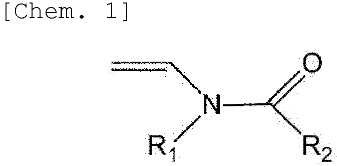 (wherein R₁ and R₂ are each independently H or a C1-C10 alkyl group) and a compound represented by the following formula: 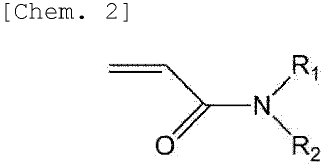 (wherein R₁ and R₂ are each independently H or a C1-C10 alkyl group).

Preferred among these are N-vinyl lactam compounds and acyclic N-vinylamide compounds, more preferred is at least one selected from the group consisting of N-vinyl-β-propiolactam, N-vinyl-2-pyrrolidone, N-vinyl-γ-valerolactam, N-vinyl-2-piperidone, and N-vinyl-heptolactam, still more preferred is at least one selected from the group consisting of N-vinyl-2-pyrrolidone and N-vinyl-2-piperidone, and particularly preferred is N-vinyl-2-pyrrolidone.

The fluoromonomer/amide bond-containing polymerizable vinyl compound copolymer may further contain a different monomer unit other than the fluoromonomer unit and the amide bond-containing polymerizable vinyl compound unit to the extent that the effects of the composition of the disclosure are not impaired. Examples of the different monomer unit include a vinyl ester monomer unit, a vinyl ether monomer unit, a (meth)acrylic monomer unit containing polyethylene glycol in a side chain, a vinyl monomer unit containing polyethylene glycol in a side chain, a (meth)acrylic monomer unit containing a long-chain hydrocarbon group, and a vinyl monomer unit containing a long-chain hydrocarbon group. The total amount of the different monomer units may be 0 to 50 mol%, may be 0 to 40 mol%, may be 0 to 30 mol%, may be 0 to 15 mol%, or may be 0 to 5 mol%.

The fluoromonomer/amide bond-containing polymerizable vinyl compound copolymer preferably substantially consists of a fluoromonomer unit and an amide bond-containing polymerizable vinyl compound unit.

The fluoromonomer/amide bond-containing polymerizable vinyl compound copolymer preferably has a weight average molecular weight of 10000 or more, more preferably 15000 or more, still more preferably 20000 or more, particularly preferably 30000 or more. The weight average molecular weight is more preferably 15000 to 500000, still more preferably 20000 to 300000, particularly preferably 30000 to 300000. The weight average molecular weight can be determined by gel permeation chromatography (GPC).

The composition of the disclosure preferably has a mass ratio of the inorganic filler to the copolymer (inorganic filler/copolymer) of 0.1 to 100. The mass ratio is more preferably 0.2 or higher, still more preferably 0.4 or higher, while more preferably 50 or lower, still more preferably 10 or lower, particularly preferably 5 or lower.

The composition of the disclosure, even when containing a relatively small amount of the copolymer **(i.e.,** even when the mass ratio is relatively high), has excellent dispersibility and excellent oxidation resistance.

The composition of the disclosure further contains a solvent. Examples of the solvent include water and an organic solvent. Preferred is an organic solvent.

Examples of the organic solvent include nitrogen-containing organic solvents such as N-methyl-2-pyrrolidone, N,N-dimethylacetamide, and dimethylformamide; ketone solvents such as acetone, methyl ethyl ketone, cyclohexanone, and methyl isobutyl ketone; ester solvents such as ethyl acetate and butyl acetate; ether solvents such as tetrahydrofuran, dioxane, ethyl cellosolve, methyl cellosolve, diglyme, and triglyme; aromatic hydrocarbon solvents such as xylene, toluene, and solvent naphtha; aliphatic hydrocarbon solvents such as n-pentane, n-hexane, n-heptane, n-octane, n-nonane, n-decane, n-undecane, n-dodecane, and mineral spirits; and solvent mixtures of these.

The amount of the solvent is preferably 100000 to 10000000 parts by mass, more preferably 500000 to 5000000 parts by mass relative to 100 parts by mass of the inorganic filler.

The composition of the disclosure is preferably a dispersion where the inorganic filler is dispersed in the solvent. Since the composition of the disclosure contains the copolymer, the inorganic filler is dispersed in the solvent very well.

The composition of the disclosure may be a coating composition.

The composition of the disclosure may further contain a different component according to the use, for example. Examples of the different component include a fluoropolymer (excluding the fluoromonomer/amide bond-containing polymerizable vinyl compound copolymer), a non-fluoropolymer, an organic filler, an electrode material such as an electrode active material, and an ink pigment.

The fluoropolymer may be a polymer of a fluorine-containing ethylenic monomer and may be a copolymer obtainable by polymerizing a fluorine-containing ethylenic monomer and a fluorine-free ethylenic monomer. One or two or more fluorine-containing ethylenic monomers may be used and one or two or more fluorine-free ethylenic monomers may be used.

Examples of the fluorine-containing ethylenic monomer include tetrafluoroethylene, vinylidene fluoride, trichlorofluoroethylene, chlorotrifluoroethylene, vinyl fluoride, hexafluoropropylene, 2,3,3,3-tetrafluoropropene (1234yf), a fluoroolefin represented by the following formula (i):

CX¹₂=CX²(CF₂)ₙX³ (i)

(wherein X¹, X², and X³ are the same as or different from each other, and are each a hydrogen atom or a fluorine atom, and n is an integer of 1 to 10), and a perfluoro(alkyl vinyl ether) represented by the following formula (ii):

CF₂=CF-ORf² (ii)

(wherein Rf² is a C1-C5 perfluoroalkyl group).

Examples of the fluorine-free ethylenic monomer include ethylene, propylene, 1-butene, 2-butene, vinyl chloride, a monomer (iii) represented by the following formula (iii): 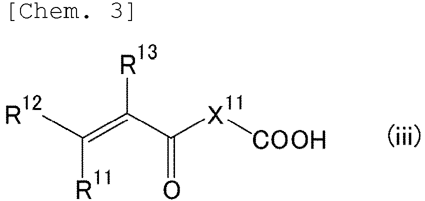 wherein R¹¹ to R¹³ are each independently a hydrogen atom, a chlorine atom, or a C1-C5 alkyl group, and X¹¹ is an atomic group that contains a main chain having 1 to 19 atoms and that has a molecular weight of not greater than 472.

The monomer (iii) is preferably a monomer (iii-1) represented by the following formula (iii-1): 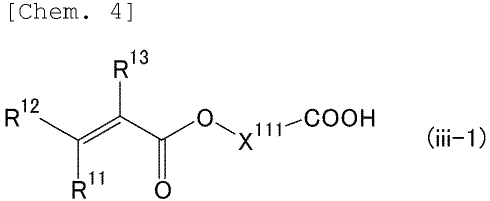 wherein R¹¹ to R¹³ are as described above, and X¹¹¹ is an atomic group that contains a main chain having 1 to 18 atoms and that has a molecular weight of not greater than 456.

Preferred examples of the fluoropolymer include a vinylidene fluoride homopolymer, a copolymer containing vinylidene fluoride and tetrafluoroethylene, a copolymer containing vinylidene fluoride and the monomer (iii), a copolymer containing vinylidene fluoride, tetrafluoroethylene, and the monomer (iii), a copolymer containing vinylidene fluoride, tetrafluoroethylene, and hexafluoropropylene, a copolymer containing vinylidene fluoride, tetrafluoroethylene, hexafluoropropylene, and the monomer (iii), and a copolymer containing vinylidene fluoride, hexafluoropropylene, and the monomer (iii).

The composition of the disclosure is suitably used as a composition for forming electrodes of secondary batteries such as lithium-ion batteries.

Electrodes of secondary batteries contain a conductive agent. When the conductive agent has poor dispersibility, the conductive agent fails to impart conductivity throughout the electrodes, causing poor performance. When an increased amount of the conductive agent is used to solve this issue, the energy density may be reduced.

Even when the inorganic filler is a conductive agent (conductive inorganic filler such as carbon filler), the composition of the disclosure can have excellent dispersibility of the inorganic filler. Also, even a small amount of the copolymer can lead to excellent dispersibility. This can result in improved performance of secondary batteries.

PVP which has been commonly used as a dispersant in the battery field has low oxidation resistance and decomposes at a high voltage of 4.45 V or higher, which may cause gas generation or an increase in resistance.

The composition of the disclosure has excellent oxidation resistance, and thus is applicable to high-voltage secondary batteries.

Also, the composition of the disclosure shows a small change in viscosity when in the form of an electrode mixture slurry compared to the case of using PVP as a dispersant.

The composition of the disclosure, when used as a composition for forming electrodes of secondary batteries, preferably contains the conductive inorganic filler, the copolymer, and the solvent. The composition may further contain other components such as an electrode active material, a binder, and a thickener. Examples of the binder include the above-described fluoropolymers (excluding the fluoromonomer/amide bond-containing polymerizable vinyl compound copolymer).

The composition of the disclosure can be particularly suitably used as a composition for forming positive electrodes of secondary batteries.

The disclosure also relates to a laminate including a substrate and a film that is on the substrate and is obtainable from the composition of the disclosure.

The substrate may be formed from, for example, metal, ceramic, resin, or glass.

Examples of the metal include iron, stainless steel, copper, aluminum, nickel, and titanium. Examples of the ceramic include earthenware, porcelain, an alumina material, a zirconia material, and a silicon oxide material. Examples of the resin include polyethylene terephthalate resin, polycarbonate resin, silicone resin, fluorosilicone resin, polyamide resin, polyamide-imide resin, polyimide resin, polyester resin, epoxy resin, polyphenylene sulfide resin, phenol resin, acrylic resin, and polyethersulfone resin.

The substrate may be a secondary battery current collector. The current collector (positive electrode current collector or negative electrode current collector) may be metal foil or metal mesh of iron, stainless steel, copper, aluminum, nickel, or titanium, for example. In particular, for example, the positive electrode current collector is preferably aluminum foil and the negative electrode current collector is preferably copper foil.

The laminate of the disclosure may be produced by applying the composition of the disclosure to the substrate, optionally followed by any of steps such as drying, curing, and pressing.

A film obtainable from the composition may be directly formed on the substrate or may be formed on another layer located on the substrate.

The film obtainable from the composition may have a thickness of 1 to 1000 µm, for example, although it depends the use.

The laminate of the disclosure can suitably be used for a conductive member. In this case, the inorganic filler is preferably a conductive inorganic filler.

A conductive member including the laminate of the disclosure is also an aspect of the disclosure. The conductive member is preferably used as a secondary battery electrode, for example.

The disclosure also relates to a dispersant for dispersing an inorganic filler in a solvent, the dispersant containing a copolymer of a fluoromonomer and an amide bond-containing polymerizable vinyl compound.

The dispersant of the disclosure, which contains the copolymer, has better dispersibility of the inorganic filler (dispersibility of the inorganic filler in a solvent) and better oxidation resistance than dispersants containing polyvinylpyrrolidone (PVP), for example.

The dispersant of the disclosure, even in a relatively small amount, has an excellent ability to disperse the inorganic filler and excellent oxidation resistance.

The dispersant of the disclosure even after a long period of time (e.g., after 7 days or more after preparation) can provide a composition that enables excellent dispersibility of an inorganic filler (inorganic filler dispersion).

The dispersant of the disclosure can also provide a composition (inorganic filler dispersion) showing a small change in viscosity.

The copolymer in the dispersant of the disclosure may be a copolymer similar to the copolymer of a fluoromonomer and an amide bond-containing polymerizable vinyl compound in the composition of the disclosure. Preferred examples thereof are the same.

The dispersant of the disclosure may consist only of the copolymer.

Examples of the inorganic filler and the solvent as targets of the dispersant of the disclosure include the same inorganic fillers and solvents usable in the composition of the disclosure. Preferred examples thereof are the same.

The dispersant of the disclosure is preferably used such that the mass ratio of the inorganic filler to the copolymer (inorganic filler/copolymer) is 0.1 to 100. The mass ratio is more preferably 0.2 or higher, still more preferably 0.4 or higher, while more preferably 50 or lower, still more preferably 10 or lower, particularly preferably 5 or lower.

The dispersant of the disclosure, even when used in a relatively small amount (even when the mass ratio is relatively high), has an excellent ability to disperse an inorganic filler and excellent oxidation resistance.

The dispersant of the disclosure is preferably a dispersant for dispersing 100 parts by mass of the inorganic filler in 100000 to 10000000 parts by mass, more preferably 500000 to 5000000 parts by mass of the solvent.

The composition, laminate, and dispersant of the disclosure can be suitably used in various fields where the dispersibility of an inorganic filler and oxidation resistance are demanded.

For example, they can suitably be used for inks, rubbers, conductive films, and electrochemical devices (e.g., batteries). In particular, they are preferably used for secondary batteries, more preferably used for electrodes of secondary batteries.

### EXAMPLES

The disclosure is described in more detail below with reference to examples. Still, the disclosure is not intended to be limited to these examples.

The following components were used in the examples and comparative examples.
SWCNT: single wall CNT (CNTs2, SUSN)
Alumina: alumina particles having an average particle size of 0.5 µm (commercial product)
NMP: N-methyl-2-pyrrolidone (water-soluble organic solvent, Tokyo Chemical Industry Co., Ltd.)
PVP K30: polyvinylpyrrolidone having a weight average molecular weight of 4.0 × 10⁴ (Tokyo Chemical Industry Co., Ltd.)
Dispersant 1: copolymer having a weight average molecular weight of 4.6 × 10⁴, containing 48 mol% of a tetrafluoroethylene unit and 52 mol% of a N-vinyl-2-pyrrolidone unit
Dispersant 2: copolymer having a weight average molecular weight of 4.5 × 10⁴, containing 36 mol% of a tetrafluoroethylene unit and 64 mol% of a N-vinyl-2-pyrrolidone unit
Additive 1: PVdF (polyvinylidene fluoride) (#7200, Kureha Corporation)

### <Preparation of dispersion>

### Example 1

SWCNT (10 mg) and a dispersant 1 (100 mg) were added to NMP (100 g) and they were sonicated (37 kHz) for one hour. Thereby, a SWCNT dispersion 1 was prepared.

### Example 2

A dispersion 2 was prepared as in Example 1, except that the amount of the dispersant 1 was changed from 100 mg to 50 mg.

### Example 3

A dispersion 3 was prepared as in Example 1, except that the amount of the dispersant 1 was changed from 100 mg to 20 mg.

### Example 4

A dispersion 4 was prepared as in Example 1, except that the amount of the dispersant 1 was changed from 100 mg to 10 mg.

### Example 5

A dispersion 5 was prepared as in Example 3, except that the dispersant 2 (20 mg) was used instead of the dispersant 1.

### Example 6

A dispersion 6 was prepared as in Example 3, except that alumina (10 mg) was used instead of the inorganic filler.

### Example 7

A dispersion 7 was prepared as in Example 6, except that the dispersant 2 (20 mg) was used instead of the dispersant 1.

### Example 8

A dispersion 8 was prepared as in Example 3, except that the additive 1 (100 mg) was added to the dispersion 3.

### Example 9

A dispersion 9 was prepared as in Example 5, except that the additive 1 (100 mg) was added to the dispersion 5.

### Comparative Example 1

SWCNT (10 mg) was added to NMP (100 g) and they were sonicated (37 kHz) for one hour. Thereby, a SWCNT dispersion 10 was prepared.

### Comparative Example 2

SWCNT (10 mg) and PVP K30 (100 mg) were added to NMP (100 g) and they were sonicated (37 kHz) for one hour. Thereby, a SWCNT dispersion 11 was prepared.

### Comparative Example 3

A dispersion 12 was prepared as in Comparative Example 2, except that the amount of PVP K30 was changed from 100 mg to 20 mg.

### Comparative Example 4

A dispersion 13 was prepared as in Comparative Example 3, except that the additive 1 (100 mg) was added to the dispersion 12.

### <Evaluation of dispersibility>

The dispersions 1 to 13 were left to stand at room temperature for five hours, and about 2 mL of each sample was put into a 5-mL vial. Each sample was visually checked for precipitation. The dispersions were further left to stand for 7 days and checked for precipitation. Dispersions with precipitation were evaluated as poor and dispersions with no precipitation were evaluated as good.

The results are shown in Table 1.

### <Evaluation of oxidation resistance>

The oxidation resistance was evaluated by linear sweep voltammetry (LSV). In the measurement by LSV, 1.0 M LiPF₆ was used as an electrolyte and a solution mixture containing ethylene carbonate and ethyl methyl carbonate in a volume ratio of 3:7 was used as a standard solvent for measurement. To a portion of the standard solvent for measurement was added 1.0% by weight of PVP K30, the dispersant 1, or the dispersant 2. Then, to each solution was added 0.1% by mass of SWCNT. Thereby, three solutions for measurement were prepared. Each solution for measurement prepared in advance was put into a measurement vessel, and a platinum electrode as a working electrode and lithium electrodes as a counter electrode and a reference electrode were immersed into the solution. Thereby, LSV measurement cells were prepared. Each cell was subjected to onset potential measurement where the voltage was swept from the open-circuit voltage (OCV) to 8 V (vs. Li⁺/Li) for oxidation at a sweep rate of 5 mV/s. The onset potential was determined as the potential at which the response current reached 5 mA/cm².

The results are shown in Table 2.

**[Table 1]**

| Level | Inorganic filler | | Dispersion | | | | | Filler/dispersant ratio | Additive | | Evaluation results of dispersibility | |
|---|---|---|---|---|---|---|---|---|---|---|---|---|
| | Type | Amount [mg] | Disperison No. | Type of dispersant | Amount [mg] | Type of solvent | Amount of solvent [g] | | Type | Amount [mg] | After preparation | After 7 days |
| Example 1 | SWCNT | 10 | Disperison 1 | Dispersant 1 | 100 | NMP | 100 | 0.1 | - | - | Good | Good |
| Example 2 | SWCNT | 10 | Disperison 2 | Dispersant 1 | 50 | NMP | 100 | 0.2 | - | - | Good | Good |
| Example 3 | SWCNT | 10 | Disperison 3 | Dispersant 1 | 20 | NMP | 100 | 0.5 | - | - | Good | Good |
| Example 4 | SWCNT | 10 | Disperison 4 | Dispersant 1 | 10 | NMP | 100 | 1.0 | - | - | Good | Poor |
| Example 5 | SWCNT | 10 | Disperison 5 | Dispersant 2 | 20 | NMP | 100 | 0.5 | - | - | Good | Good |
| Example 6 | Alumina | 10 | Disperison 6 | Dispersant 1 | 20 | NMP | 100 | 0.5 | - | - | Good | Poor |
| Example 7 | Alumina | 10 | Disperison 7 | Dispersant 2 | 20 | NMP | 100 | 0.5 | - | - | Good | Poor |
| Example 8 | SWCNT | 10 | Disperison 8 | Dispersant 1 | 20 | NMP | 100 | 0.5 | Additive 1 | 100 | Good | Good |
| Example 9 | SWCNT | 10 | Disperison 9 | Dispersant 2 | 20 | NMP | 100 | 0.5 | Additive 1 | 100 | Good | Good |
| Comparative Example 1 | SWCNT | 10 | Disperison 10 | - | - | NMP | 100 | - | - | - | Poor | - |
| Comparative Example 2 | SWCNT | 10 | Disperison 11 | PVP K30 | 100 | NMP | 100 | 0.1 | - | - | Good | Poor |
| Comparative Example 3 | SWCNT | 10 | Disperison 12 | PVP K30 | 20 | NMP | 100 | 0.5 | - | - | Poor | - |
| Comparative Example 4 | SWCNT | 10 | Disperison 13 | PVP K30 | 20 | NMP | 100 | 0.5 | Additive 1 | 100 | Good | Poor |

**[Table 2]**

| Dispersant | Results of LSV measurement [V vs Li/Li+] |
|---|---|
| Dispersant 1 | 6.75 |
| Dispersant 2 | 6.73 |
| PVP K30 | 6.70 |

## Claims

1. A composition comprising:
an inorganic filler;
a copolymer of a fluoromonomer and an amide bond-containing polymerizable vinyl compound; and
a solvent;
wherein
the inorganic filler is at least one selected from the group consisting of a carbon filler, and a ceramic filler,
the copolymer is a copolymer of at least one fluoromonomer selected from the group consisting of tetrafluoroethylene and hexafluoropropylene and at least one amide bond-containing polymerizable vinyl compound selected from the group consisting of N-vinyl lactam compounds, acyclic N-vinylamide compounds, acyclic N-allyl amide compounds, and N-allyl lactam compounds, and
the copolymer contains a unit of the fluoromonomer and a unit of the amide bond-containing polymerizable vinyl compound in amounts of 65 to 7 mol% and 35 to 93 mol%, respectively, of all monomer units.

2. The composition according to claim 1,
wherein the composition has a mass ratio (inorganic filler/copolymer) of the inorganic filler to the copolymer of 0.1 to 100.

3. The composition according to claim 1 or 2,
wherein the inorganic filler includes a carbon filler.

4. The composition according to any one of claims 1 to 3,
wherein the inorganic filler includes fibrous carbon.

5. The composition according to any one of claims 1 to 4,
wherein the inorganic filler includes a carbon nanotube.

6. A laminate comprising:
a substrate; and
a film formed on the substrate by applying the composition according to any one of claims 1 to 5 to the substrate.

7. A conductive member comprising the laminate according to claim 6.

8. Use of a dispersant consisting of a copolymer of a fluoromonomer and an amide bond-containing polymerizable vinyl compound for dispersing an inorganic filler in a solvent,
wherein
the inorganic filler is at least one selected from the group consisting of a carbon filler, and a ceramic filler,
the copolymer is a copolymer of at least one fluoromonomer selected from the group consisting of tetrafluoroethylene and hexafluoropropylene and at least one amide bond-containing polymerizable vinyl compound selected from the group consisting of N-vinyl lactam compounds, acyclic N-vinylamide compounds, acyclic N-allyl amide compounds, and N-allyl lactam compounds, and
the copolymer contains a unit of the fluoromonomer and a unit of the amide bond-containing polymerizable vinyl compound in amounts of 65 to 7 mol% and 35 to 93 mols, respectively, of all monomer units.

## Patentansprüche

1. Zusammensetzung, umfassend:
einen anorganischen Füllstoff;
ein Copolymer aus einem Fluormonomer und einer Amidbindung enthaltenden polymerisierbaren Vinylverbindung; und
ein Lösungsmittel;
wobei
der anorganische Füllstoff mindestens einer ist, ausgewählt aus der Gruppe, bestehend aus einem Kohlenstofffüllstoff und einem Keramikfüllstoff,
das Copolymer ein Copolymer aus mindestens einem Fluormonomer ist, ausgewählt aus der Gruppe, bestehend aus Tetrafluorethylen und Hexafluorpropylen, und mindestens einer Amidbindung enthaltenden polymerisierbaren Vinylverbindung, ausgewählt aus der Gruppe, bestehend aus N-Vinyllactamverbindungen, acyclischen N-Vinylamidverbindungen, acyclischen N-Allylamidverbindungen und N-Allyllactamverbindungen, und
das Copolymer eine Einheit des Fluormonomers und eine Einheit der Amidbindung enthaltenden polymerisierbaren Vinylverbindung in Mengen von 65 bis 7 Mol-% bzw. 35 bis 93 Mol-% aller Monomereinheiten enthält.

2. Zusammensetzung nach Anspruch 1,
wobei die Zusammensetzung ein Massenverhältnis (anorganischer Füllstoff/Copolymer) des anorganischen Füllstoffs zu dem Copolymer von 0,1 bis 100 aufweist.

3. Zusammensetzung nach Anspruch 1 oder 2,
wobei der anorganische Füllstoff einen Kohlenstofffüllstoff einschließt.

4. Zusammensetzung nach einem der Ansprüche 1 bis **3,**
wobei der anorganische Füllstoff faserförmigen Kohlenstoff einschließt.

5. Zusammensetzung nach einem der Ansprüche 1 bis **4,**
wobei der anorganische Füllstoff eine Kohlenstoff-Nanoröhre einschließt.

6. Laminat, umfassend:
ein Substrat; und
einen Film, der auf dem Substrat durch Aufbringen der Zusammensetzung nach einem der Ansprüche 1 bis 5 auf das Substrat gebildet ist.

7. Leitfähiges Element, umfassend das Laminat nach Anspruch **6.**

8. Verwendung eines Dispergiermittels, bestehend aus einem Copolymer aus einem Fluormonomer und einer Amidbindung enthaltenden polymerisierbaren Vinylverbindung, zum Dispergieren eines anorganischen Füllstoffs in einem Lösungsmittel,
wobei
der anorganische Füllstoff mindestens einer ist, ausgewählt aus der Gruppe, bestehend aus einem Kohlenstofffüllstoff und einem Keramikfüllstoff,
das Copolymer ein Copolymer aus mindestens einem Fluormonomer ist, ausgewählt aus der Gruppe, bestehend aus Tetrafluorethylen und Hexafluorpropylen, und mindestens einer Amidbindung enthaltenden polymerisierbaren Vinylverbindung, ausgewählt aus der Gruppe, bestehend aus **N-**Vinyllactamverbindungen, acyclischen **N-**Vinylamidverbindungen, acyclischen N-Allylamidverbindungen und N-Allyllactamverbindungen, und
das Copolymer eine Einheit des Fluormonomers und eine Einheit der Amidbindung enthaltenden polymerisierbaren Vinylverbindung in Mengen von 65 bis 7 Mol-% bzw. 35 bis 93 Mol-% aller Monomereinheiten enthält.

## Revendications

1. Composition comprenant:
une charge inorganique ;
un copolymère d'un fluoromonomère et d'un composé vinylique polymérisable contenant une liaison amide ; et
un solvant ;
dans lequel
la charge inorganique est au moins une charge choisie dans le groupe constitué d'une charge de carbone et d'une charge de céramique,
le copolymère est un copolymère d'au moins un fluoromonomère choisi dans le groupe constitué par le tétrafluoroéthylène et l'hexafluoropropylène et d'au moins un composé vinylique polymérisable contenant une liaison amide choisi dans le groupe constitué par les composés **N-**vinyl lactame, les composés N-vinylamide acycliques, les composés N-allyl amide acycliques et les composés N-allyl lactame, et
le copolymère contient une unité de fluoromonomère et une unité de composé vinylique polymérisable contenant une liaison amide en quantités de 65 à 7 % en moles et de 35 à 93 % en moles, respectivement, de toutes les unités monomères.

2. Composition selon la revendication 1,
dans laquelle la composition présente un rapport de masse (charge inorganique/copolymère) entre la charge inorganique et le copolymère compris entre 0,1 et 100.

3. Composition selon la revendication 1 ou 2, dans lequel la charge inorganique comprend une charge de carbone.

4. Composition selon l'une des revendications 1 à 3, dans lequel la charge inorganique comprend du carbone fibreux.

5. Composition selon l'une des revendications 1 à 4, dans lequel la charge inorganique comprend un nanotube de carbone.

6. Stratifié comprenant:
un substrat ; et
un film formé sur le substrat en appliquant la composition selon l'une quelconque des revendications 1 à 5 sur le substrat.

7. Élément conducteur comprenant le laminé selon la revendication 6.

8. Utilisation d'un dispersant constitué d'un copolymère d'un fluoromonomère et d'un composé vinylique polymérisable contenant une liaison amide pour disperser une charge inorganique dans un solvant,
dans lequel
la charge inorganique est au moins une charge choisie dans le groupe constitué d'une charge de carbone et d'une charge de céramique,
le copolymère est un copolymère d'au moins un fluoromonomère choisi dans le groupe constitué par le tétrafluoroéthylène et l'hexafluoropropylène et d'au moins un composé vinylique polymérisable contenant une liaison amide choisi dans le groupe constitué par les composés N-vinyl lactame, les composés N-vinylamide acycliques, les composés N-allyl amide acycliques et les composés N-allyl lactame, et
le copolymère contient une unité de fluoromonomère et une unité de composé vinylique polymérisable contenant une liaison amide en quantités de 65 à 7 % en moles et de 35 à 93 % en moles, respectivement, de toutes les unités monomères.
